# EUROPÄISCHE PATENTSCHRIFT

(11) **EP 0 907 314 B1**
(45) Veröffentlichungstag und Bekanntmachung des Hinweises auf die Patenterteilung: **27.12.2000**
(21) Anmeldenummer: 96923954.0
(22) Anmeldetag: 27.06.1996
(51) Int. Cl.: A01K 7/02, A01K 11/00, A01K 15/02, A01J 5/017, A01K 1/12

(54) **VERFAHREN UND VORRICHTUNGEN ZUM STEUERN VON FREILAUFENDEN, IDENTIFIZIERUNGSMITTEL TRAGENDEN TIEREN**
PROCESS AND DEVICE FOR CONTROLLING FREE ANIMALS CARRYING IDENTIFICATION MEANS
PROCEDE ET DISPOSITIF POUR DIRIGER DES ANIMAUX EN LIBERTE PORTEURS DE MOYENS D'IDENTIFICATION

(43) Veröffentlichungstag der Anmeldung: 14.04.1999
(73) Patentinhaber: Westfalia Landtechnik GmbH, 59302 Oelde (DE)
(72) Erfinder: DÜCK, Matthias, D-21255 Tostedt (DE)
(74) Vertreter: Eisenführ, Speiser & Partner
(86) Internationale Anmeldenummer: EP9602809
(87) Internationale Veröffentlichungsnummer: WO9800006

(56) Entgegenhaltungen:
- EP-A- 0 095 317
- DE-A- 3 623 816
- DE-A- 3 702 465
- DE-A- 19 521 570
- US-A- 4 655 170

## Beschreibung

Die Erfindung betrifft ein Verfahren zum Steuern von freilaufenden, Identifizierungsmittel tragenden Tieren in einem Stallgebäude, einem befriedeten Auslauf oder auf der Weide. Die Erfindung betrifft ferner eine Vorrichtung zur Durchführung des genannten Verfahrens.

Ein derartiges Verfahren ist für die Nutzviehhaltung, und hier besonders von Rindern, von besonderem praktischen Nutzen, da es eine vom Tierbetreuer gewünschte Richtungsbewegung (Steuerung) der Tiere ohne mechanische Treibhilfen oder menschliche Treiber ermöglicht und somit hilft, Bau- bzw. Personalkosten zu sparen, Besondere Bedeutung kommt einem derartigen Verfahren bei Verwendung von Systemen zum vollautomatischen Milchentzug, sogenannten Melkrobotern zu. Der Einsatz von Melkrobotern setzt voraus, daß die zu melkenden Tiere den Melkroboter freiwillig aufsuchen oder diesem zugetrieben werden.

Ein derartiges Verfahren ist aus der DE 37 02 465 A1 bekannt, bei dem melkreife, automatisch zu melkende Tiere, auf einem Zwangsweg vom Laufstall zu den Grundfutterfreßplätzen und/oder Tränken identifiziert und gegebenenfalls dem Melkstand zugeleitet werden. Dieses bekannte Verfahren setzt verfahrensbedingt eine räumliche Trennung von erstens Liegebereich, zweitens Grundfutterfreß- und/oder Tränkebereich sowie drittens dem Melkbereich voraus. Hierdurch sind folgende Nachteile gegeben:

In vielen bestehenden Stallanlagen (z.B. den sogenannten dreireihigen Liegeboxenlaufställen) ist eine räumliche Trennung von Liegeboxenbereich (Laufstallbereich) und Grundfutterfreßbereich nicht möglich. Die Zuführung von melkreifen Tieren zum Melkstand kann also nur durch Errichtung eines Zwangsweges zu den Tränken erreicht werden. Dies setzt eine Installation von Tränken ausschließlich in der Nähe des Melkstandes voraus. Nun ist anerkannter Stand der Technik, daß für jeweils etwa 30 Tiere eine Tränke installiert sein sollte. Den Tieren sollte darüber hinaus eine Wasseraufnahme ohne weite Wege möglich sein. In größeren Milchviehanlagen stehen diese beiden letzten Forderungen einer Installation von Tränken ausschließlich in der Nähe des Melkbereiches entgegen. Durch eine zu geringe Anzahl von Tränken oder zu weite Wege zu den Tränken kann die Wasseraufnahme reduziert werden, was zu Leistungsverlusten der Milchtiere führen kann.

Der Erfindung liegt die Aufgabe zugrunde, ein Verfahren und eine Vorrichtung der eingangs genannten Art derart weiterzubilden, daß Tiere ohne äußere Einflüsse wie mechanische Treibevorrichtungen etc. einem bestimmten Platz, z.B. dem Beginn eines Zwangsweges, einem Melkstand, einer Selektionsbox oder einem anderen gewünschten Platz sicher zugeführt werden.

Diese Aufgabe wird erfindungsgemäß durch ein Verfahren der eingangs genannten Art gelöst, bei dem die Tiere an den mit Wasserabsperrvorrichtungen versehenen Tränken identifiziert werden und der Wasserzulauf durch eine zentrale Steuereinheit freigegeben wird, und wobei der Wasserzulauf nur in Abhängigkeit von tierindividuellen oder tiergruppenindividuellen Daten freigegeben wird.

Diese Aufgabe wird erfindungsgemäß durch eine Vorrichtung zum Steuern von freilaufenden, Identifizierungsmittel tragenden Tieren in einem Stallgebäude, einem befriedeten Auslauf oder auf der Weide, dadurch gelöst, daß in dem Aufenthaltsbereich der Tiere Tränken mit Wasserabsperrvorrichtungen sowie Mittel zum Erkennen der von den Tieren getragenen Identifizierungsmittel angeordnet sind und daß die Erkennungsmittel und die Wasserabsperrvorrichtungen von einer zentralen Steuereinheit derart gesteuert werden, daß bei Annäherung eines Tieres an eine Tränke die Öffnung des Wasserzulaufes dieser Tränke nur erfolgt, wenn es die Steuereinheit aufgrund gespeicherter tierindividueller oder tiergruppenindividueller Daten zuläßt.

Vorzugsweise haben die Tränkebecken nur ein kleines Wasservolumen. Diese Tränken sind mit der zentralen Steuereinheit verbunden, die den Wasserzulauf in Abhängigkeit von der Programmierung freigeben oder sperren kann.

Nähert sich nun ein Tier zur Wasseraufnahme einer Tränke, so wird es an der Tränke identifiziert und diese Daten einer zentralen Steuereinheit zugeleitet. Die zentrale Steuereinheit bestimmt, z.B. aufgrund Einprogrammierung entsprechender Daten, ob dieses Tier in dem Stallbereich, in dem es sich gerade an einer Tränke befindet, verbleiben, oder ob es sich zu einem anderen gewünschten Platz, z.B. einem Melkroboter bewegen soll. Soll dieses Tier im aktuellen Fall keinem bestimmten Platz zugeführt werden, so wird von der zentralen Steuereinheit die Absperrvorrichtung geöffnet und das Tier kann saufen. Soll das Tier sich jedoch zu einem anderen gewünschten Platz bewegen, so bleibt die Wasserabsperrvorrichtung geschlossen. Das Tier kann kein Wasser aufnehmen und wird eine andere Tränke aufsuchen. Auch an anderen Tränken bleibt die Wasserabsperrvorrichtung geschlossen, wenn sich die Tränken nicht in dem Bereich befinden, in den sich das Tier bewegen soll. Nur an der oder den Tränken in dem gewünschten Bereich oder an dem gewünschten Platz wird bei Annäherung des Tieres die Wasserabsperrvorrichtung geöffnet, so daß das Tier Wasser aufnehmen kann.

Ist dieser gewünschte Platz immer für alle Tiere gleich, so kann in einer alternativen Ausführungsform hier auch eine Tränke mit größerem Tränkevolumen ohne Wasserabsperrvorrichtung (z.B. sogenannte Wannentränke) installiert sein.

In einer weiteren vorteilhaften Ausführungsform können die mit einer Wasserabsperrvorrichtung versehenen Tränken auch mit einem Durchflußmengenzähler versehen werden, der seine Meßwerte an die zentrale Steuer- und Kontrolleinheit überträgt. Mit den dann vorhandenen technischen Mitteln ist eine tierindividuelle Erfassung und Abspeicherung der aufgenommenen Wassermengen möglich. Diese Daten sind für die Herdenführung von großem Nutzen.

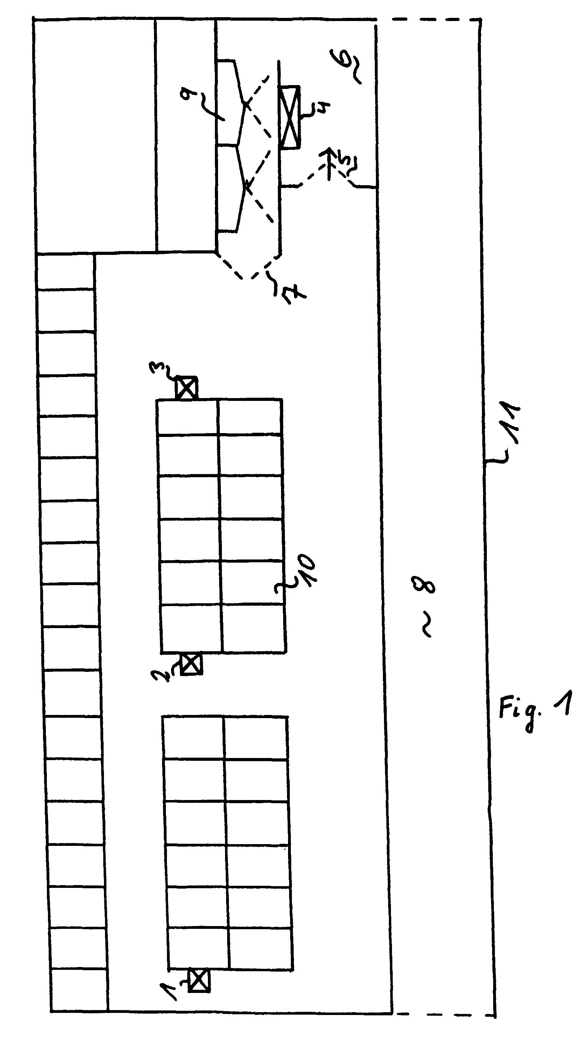

Anhand von Fig. 1 soll die Anwendung des Verfahrens und Vorrichtung beispielhaft beschrieben werden.

Dargestellt ist als Beispiel ein Stallgebäude (11) mit Liegeboxen (10), einem Futtertisch (8), einem Melkbereich mit z.B. einem Melkroboter (9), sowie 3 Tränken mit Wasserabsperrvorrichtungen (1), (2), (3) und einer Tränke (mit oder ohne Wasserabsperrvorrichtung) (4), die in dem gewünschten Bereich, in diesem Beispiel dem Eingangsbereich des Melkroboters (6), installiert ist. Zusätzlich können nur in einer Richtung zu passierende Tore (5), (7) installiert sein, die bestimmte Bereiche voneinander abgrenzen. In dem vorliegenden Beispiel liegt das Problem darin, daß sämtliche Tiere der Herde den Melkbereich (9) aufsuchen sollen. Die Häufigkeit des Aufsuchens kann dabei von Tier zu Tier verschieden sein. Für ein Beispielstier wird hier angenommen, daß es etwa alle 10 Stunden gemolken werden soll. Verspürt das Tier Durst, so sucht es eine beliebige Tränke (1), (2), (3) oder (4) auf und wird identifiziert. Die zentrale Steuer- und Kontrolleinheit wird bis zu 10 Stunden nach dem letzten Melken (oder einer anderen festgelegten Zeit) an jeder der Tränken die Wasserabsperrvorrichtung öffnen. Nach Überschreiten von z.B. 10 Stunden wird an den Tränken im Laufstallbereich (1), (2), (3) für das durstige Tier die Wasserabsperrvorrichtung nicht mehr geöffnet. Das durstige Tier kann dann nur noch an der Tränke in dem gewünschten Bereich (4), in diesem Beispiel dem Eingangsbereich zum Melkroboter (6), Wasser aufnehmen.

Da das Bedürfnis zur Wasseraufnahme bei allen Tieren sehr groß ist, wird mit diesem Verfahren erfindungsgemäß sichergestellt, daß sämtliche Tiere einer Herde einem gewünschten Platz sicher zugeleitet werden, unter Vermeidung der beschriebenen Nachteile, nämlich daß die Wege zur Tränke zu weit werden oder daß zu wenig Tränken für große Herden zur Verfügung stehen, weil eine Vielzahl von Tränken die meiste Zeit über allen Tieren zur Verfügung stehen.

## Patentansprüche

1. Verfahren zum Steuern von freilaufenden, Identifizierungsmittel tragenden Tieren in einem Stallgebäude (11), einem befriedeten Auslauf oder auf der Weide, dadurch gekennzeichnet, daß die Tiere an den mit Wasserabsperrvorrichtungen versehenen Tränken (1, 2, 3, 4) identifiziert werden und der Wasserzulauf durch eine zentrale Steuereinheit freigegeben wird, und daß der Wasserzulauf nur in Abhängigkeit von tierindividuellen oder tiergruppenindividuellen Daten freigegeben wird.

2. Verfahren nach Anspruch 1,
dadurch gekennzeichnet, daß die Tränken mit einem Durchflußmengenmesser versehen sind, welche die beim Saufen eines Tieres gewonnenen Meßwerte an die Steuereinheit übermitteln.

3. Vorrichtung zum Steuern von freilaufenden, Identifizierungsmittel tragenden Tieren in einem Stallgebäude (11), einem befriedeten Auslauf oder auf der Weide,
dadurch gekennzeichnet, daß in dem Aufenthaltsbereich der Tiere Tränken (1, 2, 3, 4) mit Wasserabsperrvorrichtungen sowie Mittel zum Erkennen der von den Tieren getragenen Identifizierungsmittel angeordnet sind und daß die Erkennungsmittel und die Wasserabsperrvorrichtungen von einer zentralen Steuereinheit derart gesteuert werden, daß bei Annäherung eines Tieres an eine Tränke (1, 2, 3, 4) die Öffnung des Wasserzulaufes dieser Tränke nur erfolgt, wenn es die Steuereinheit aufgrund gespeicherter tierindividueller oder tiergruppenindividueller Daten zuläßt.

4. Vorrichtung nach Anspruch 3,
dadurch gekennzeichnet, daß die Tränken zusätzlich mit einem Durchflußmengenmesser versehen sind, der die Meßwerte an die Steuereinheit übermittelt und den tierindividuellen Daten zuordnet.

## Claims

1. A process for controlling free-roaming animals wearing identification means in a barn (11), an open run or out at pasture, characterised in that the animals are identified at the drinking troughs (1, 2, 3, 4) provided with water shut-off devices and the water supply is released by a central control unit, and in that the water supply is only released in dependence on data for each animal or a group of animals.

2. A process according to Claim 1, characterised in that the drinking troughs are provided with a flow-rate meter which transmits the measured values obtained when an animal is drinking to the control unit.

3. A device for controlling free-roaming animals wearing identification means in a barn (11), an open run or out at pasture, characterised in that drinking troughs (1, 2, 3, 4) having water cut-off devices and means for recognising the identification means worn by the animals are arranged in the area in which the animals are kept, and in that the recognition means and the water cut-off devices are controlled by a central control unit such that, as an animal approaches a drinking trough (1, 2, 3, 4), the water supply to this drinking trough is only opened when permitted by the control unit on the basis of data stored for each animal or a group of animals.

4. A device according to Claim 3, characterised in that the drinking troughs are also provided with a flow-rate meter which transmits the measured values to the control unit and associates them with the data for each animal.

## Revendications

1. Procédé destiné à guider dans une étable (11), une prairie clôturée ou une pâture, des animaux en liberté portant des moyens d'identification, caractérisé en ce que les animaux sont identifiés au niveau des abreuvoirs (1, 2, 3, 4) dotés de dispositifs de fermeture des eaux et en ce que le courant d'eau est délivré par un module de commande central, et en ce que le courant d'eau n'est délivré qu'en fonction de données individualisées selon les animaux ou groupes d'animaux.

2. Procédé selon la revendication 1, caractérisé en ce que les abreuvoirs sont équipés d'un débitmètre, lesquels abreuvoirs transmettent au module de commande des valeurs obtenues en donnant de l'eau à un animal.

3. Procédé destiné à guider dans une étable (11), une prairie clôturée ou une pâture, des animaux en liberté, portant des moyens d'identification, caractérisé en ce que, dans la zone de séjour des animaux, des abreuvoirs (1, 2, 3, 4) sont prévus avec des dispositifs de fermeture des eaux ainsi que des moyens de reconnaissance des moyens d'identification portés par les animaux, et en ce que les moyens de reconnaissance et les dispositifs de fermeture des eaux sont commandés par un module de commande central de telle sorte que l'ouverture du courant d'eau ne se produise que lorsqu'un animal s'approche d'un abreuvoir (1, 2, 3, 4), lorsque le module de commande l'autorise en fonction des données individualisées selon les animaux ou groupes d'animaux qui ont été enregistrées.

4. Dispositif selon la revendication 3, caractérisé en ce que les abreuvoirs sont en outre équipés d'un débitmètre, qui transmet les valeurs enregistrées au module de commande et attribue les données individualisées selon les animaux.
